# EUROPEAN PATENT APPLICATION

(11) **EP 3 571 907 A1**
(43) Date of publication of application: **27.11.2019**
(21) Application number: 19175109.8
(22) Date of filing: 17.05.2019
(51) Int. Cl.: A01B 45/02

(54) **METHOD AND DEVICE FOR VERTICUTTING GRASSLAND WITH PRESSING PLATE**

(30) Priority: 18.05.2018 NL 2020960
(71) Applicant: GKB Machines B.V., 2992 SR Barendrecht (NL)
(72) Inventor: Kraaijeveld, Teunis Jan-Willem, 2993 AE BARENDRECHT (NL)
(74) Representative: Luten, Martin Haaije

(57) **Abstract**

Method for verticutting a grassland or similar ground, wherein a rotor with verticutting blades is pulled or pushed over the grassland, wherein the rotor is rotated and the verticutting blades make a substantially vertical incision in the grassland in order to aerate the grassland and to enable removal of choking material such as thatch material/vegetation, and wherein a pressing member with recesses is co-displaced over the ground, in which recesses verticutting blades are pulled along into the ground.

## Description

Especially in the case of sports fields, but also in other cases, it is important for grass to be verticut once or several times a year, meaning that vertical cuts are made in the soil in order to aerate the grassland and the thatch layer/vegetation which develops between the grass blades can be removed or be washed away by rain more easily.

Verticutting and even cutting away of the top layer, which can be done by applicant with the same machine, for instance by exchanging the blades, has also been found effective if the ground is hybrid, i.e. artificial grass fibres have also been arranged therein in addition to grass. Under some circumstances this however entails the drawback that the ground in the form of a plastic may rise to some extent when the soil is cut into, whereby the structure is affected such that, following renewed growth of the grass, the artificial grass fibre provides insufficient additional stability to the hybrid grassland. Another significant problem relates to the risk of the whole mat being pulled into the machine by the rotor, possibly also resulting in serious damage.

The present invention provides a method for verticutting a grassland or similar ground, wherein a rotor with verticutting blades is pulled or pushed over the grassland, wherein the rotor is rotated by means of a drive and the verticutting blades make a substantially vertical incision in the grassland in order to aerate the grassland, removing choking material such as thatch material/vegetation from the ground with the verticutting blades, wherein a pressing member with recesses is co-displaced over the ground, in which recesses the verticutting blades are pulled along into the ground.

The present invention further provides a device for verticutting or cutting away a grassland, which may or may not have a hybrid structure, wherein the device comprises:
- a driving unit which can be moved over the grassland or similar ground,
- a rotor which can be driven by the driving unit, wherein verticutting blades are mounted on the rotor for the purpose of making incisions in the ground and removing filling or choking material such as thatch material/vegetation; and
- a pressing member provided with recesses for the verticutting blades to cut into the soil therethrough, wherein the pressing member is configured to keep the ground pressed down during forward movement of the driving unit.

Further advantages, features and details of the present invention will be elucidated on the basis of the following description with reference to the accompanying figures, in which:
Fig. 1 is a three-dimensional view of the preferred embodiment of the device according to the present invention;
Fig. 1A is a bottom view of the device of figure 1;
Fig. 2 is a schematic three-dimensional view of the embodiment shown in figure 1;
Fig. 3 is a side view of the device shown in figures 1 and 2; and
Fig. 4 is a schematic front view of the embodiment of the method as performed with the preferred embodiment according to figures 1, 2 and 3.

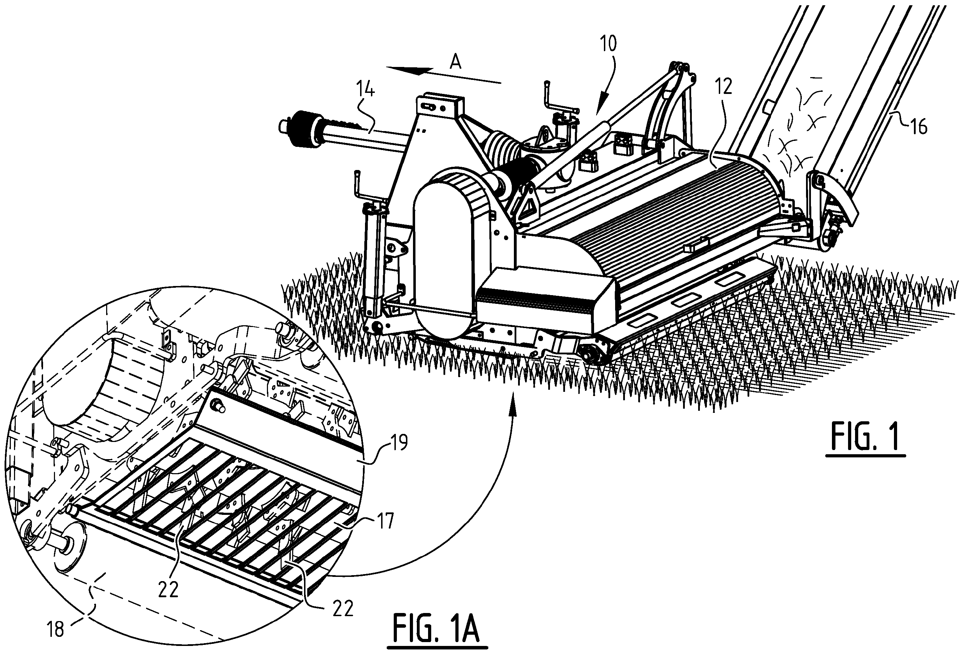

A device 10 (see figure 1) comprises a roller 20 with verticutting blades 22 arranged all around. The rotor is rotated in the direction R by means of driving shaft 24 of the roller.

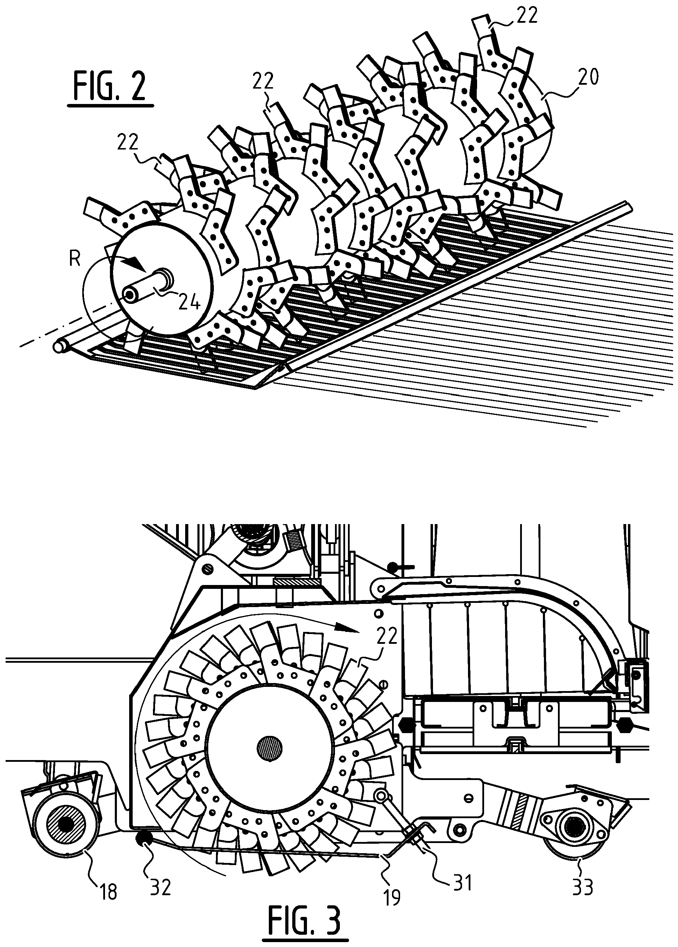

Arranged over the rotor with verticutting blades (not visible in figure 1) is a cover 12. The device is advanced in the direction of the arrow, and for instance connected to a power take-off (not further shown) by means of connecting shaft 14. The present invention will be elucidated on the basis of the following embodiment, wherein there is also an elevator conveyor 16 for elevating filling material thrown up by the device, all this as for instance described in the Netherlands patent application NL 1033182 of applicant, the content of which should be deemed as included herein. As shown mainly in figure 1, a plate-like pressing member 19 is mounted behind a pressing roller 18, in which member are arranged gaps 17 through which verticutting blades 22 are able to verticut. The side view of figure 3 clearly shows that, behind roller 18, the plate with gaps 19 is mounted pivotally and height-adjustably via an adjusting member 31, while on the front side and in the direction of travel the plate is pivotable around a shaft 32. Situated on the rear side of the plate is a roller 33. It will be apparent that plate 19 can be easily folded away (and removed), which is also important in the event that the blades have to be exchanged and other blades, such as cutting blades for wholly cutting away the grass surface, are for instance required.

In a non-limitative embodiment the verticutting blades have a width in the order of magnitude of 8 mm (4-12 mm) and the gaps have a width in the order of magnitude of 12 mm (6-18 mm). The adjustable cutting depth amounts to for instance about 2 cm (0.5-6 cm).

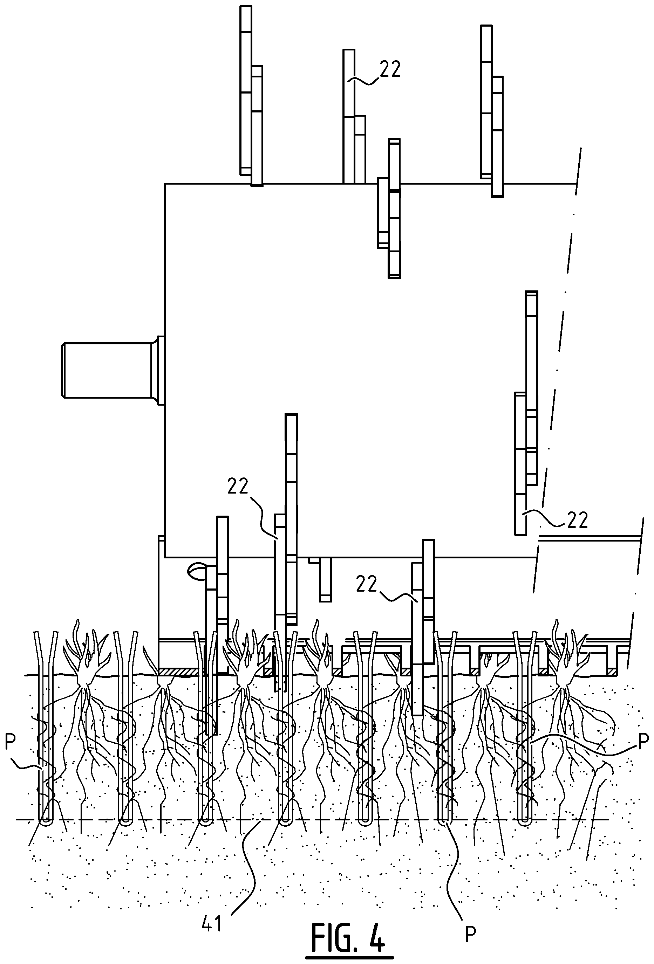

As can be seen in figure 4, the present invention can be used not only in the verticutting of grassland, but also in grounds which also comprise synthetic fibres P and thus have a so-called hybrid structure. The pressing member keeps the ground pressed down, while the verticutting blades verticut the soil for sowing as far as possible, and simultaneously leave the artificial grass behind to sufficient extent so that new grass is able to grow and the intended quality of the system is preserved. The artificial grass fibres P must particularly be held in place by the pressing plate since the artificial grass fibres may or may not be attached to a mat-like structure 41 which, in the case of overly rigorous verticutting movements, may come loose, whereby the ground is turned over too much and the artificial grass structure does not remain sufficiently intact to preserve the hybrid structure after verticutting, resowing and allowing the grass to sprout without having to renew the whole ground structure.

The following paragraphs describe further embodiments of the invention.
1. Method for verticutting a grassland or similar ground, wherein a rotor with verticutting blades is pulled or pushed over the grassland, wherein the rotor is rotated and the verticutting blades make a substantially vertical incision in the grassland in order to aerate the grassland and to enable removal of choking material such as thatch material/vegetation, and wherein a pressing member with recesses is co-displaced over the ground, in which recesses verticutting blades are pulled along into the ground.
2. Method according to paragraph 1, wherein the ground also comprises synthetic fibres and thereby forms a so-called hybrid structure.
3. Method according to paragraph 1 or 2, wherein the hybrid ground comprises an optionally mat-like structure.
4. Device for verticutting or cutting away a grassland which may or may not have a hybrid structure, wherein the device comprises:
   - a driving unit which can be moved over the grassland or similar ground,
   - a rotor on which blades are mounted for the purpose of making incisions in the ground,
   - one or more blades arranged on the rotor for the purpose of making incisions in the ground; and
   - a pressing member provided with recesses for the verticutting blades to cut into the soil therethrough, wherein the pressing member is configured to keep the ground pressed down during forward movement of the driving unit.
5. Device according to paragraph 4, wherein the device is provided with a drive which is independent of the drive of the propelling unit.
6. Device according to paragraph 4 or 5, wherein the plate is provided with longitudinal gaps for allowing passage of the blades.
7. Device according to paragraph 4, 5 or 6, wherein the pressing member is mounted pivotally on the frame of the device close to the front side of the rotor and is mounted at adjustable height on the rear side relative to the direction of forward movement of the rotor, wherein at least a rear end of the plate-like pressing member is dragged over the ground.
8. Device according to any one of the paragraphs 4-7, wherein the verticutting blades can be exchanged, preferably also for cutting blades.

The present invention is not limited to the above described embodiments: the rights sought are defined by the following claims, within the scope of which many modifications can be envisaged.

## Claims

1. Method for verticutting a grassland or similar ground,
wherein a rotor with verticutting blades is pulled or pushed over the grassland,
wherein the rotor is rotated by means of a drive and the verticutting blades make a substantially vertical incision in the grassland in order to aerate the grassland,
removing choking material such as thatch material/vegetation from the ground with the verticutting blades,
**characterized in that** a pressing member with recesses is co-displaced over the ground, in which recesses the verticutting blades are pulled along into the ground.

2. Method according to claim 1, wherein the ground also comprises synthetic fibres and thereby forms a so-called hybrid structure.

3. Method according to claim 1 or 2, wherein the hybrid ground comprises an optionally mat-like structure.

4. Device for verticutting or cutting away a grassland which may or may not have a hybrid structure, wherein the device comprises:
- a driving unit which can be moved over the grassland or similar ground,
- a rotor which can be driven by the driving unit, wherein verticutting blades are mounted on the rotor for the purpose of making incisions in the ground and removing filling or choking material such as thatch material/vegetation; and **characterized by**
- a pressing member provided with recesses for the verticutting blades to cut into the soil therethrough, wherein the pressing member is configured to keep the ground pressed down during forward movement of the driving unit.

5. Device according to claim 4, wherein the device is provided with a drive which is independent of the drive of the propelling unit.

6. Device according to claim 4 or 5, wherein the plate is provided with longitudinal gaps for allowing passage of the blades.

7. Device according to claim 4, 5 or 6, wherein the pressing member is mounted pivotally on the frame of the device close to the front side of the rotor and is mounted at adjustable height on the rear side relative to the direction of forward movement of the rotor, wherein at least a rear end of the plate-like pressing member is dragged over the ground.

8. Device according to any one of the claims 4-7, wherein the verticutting blades can be exchanged, preferably also for cutting blades.

9. Device according to any one of the claims 4-8, further comprising an elevator conveyor for elevating filling or choking material thrown up by the device.

10. Device according to any one of the claims 4-9, wherein the pressing member can be folded away.
